# EUROPEAN PATENT APPLICATION

(11) **EP 4 574 249 A1**
(43) Date of publication of application: **25.06.2025**
(21) Application number: 24221007.8
(22) Date of filing: 18.12.2024
(51) Int. Cl.: B01D 67/00, B01D 69/02, B01D 71/02, C04B 38/00

(54) **POROUS CERAMIC BODY OF MIXED CARBIDES**

(30) Priority: 18.12.2023 EP 23217611
(71) Applicant: LiqTech Holding A/S, 9500 Hobro (DK)
(72) Inventor: LEAL, Victor Manuel Candelario, 9500 Hobro (DK); FUENTES, Maria Jimenez, 9500 Hobro (DK)
(74) Representative: Høiberg P/S

(57) **Abstract**

The invention regards a porous ceramic body comprising SiC and one or more further carbides or further carbide precursor configured as a silica scavenger sintering aid, and comprising a pore size distribution having a D90/D10 ratio equal to below 1.4, more preferably equal to or below 1.3, and most preferably equal to or below 1.2.

## Description

### Technical field

The present disclosure relates to a porous ceramic body suitable for filtration, and a method of manufacturing said ceramic body. The present disclosure further relates to a filter system comprising the ceramic body, and a method of filtering a liquid.

### Background

Separation or filtration processes are used in a wide range of industries. Depending on the size of the elements to be filtered out, a distinction is made between microfiltration (MF) for e.g. separating yeast or particles, ultrafiltration (UF) for e.g. separating bacteria, macromolecules, or proteins, and nanofiltration (NF) for e.g. removal of viruses.

Membrane filtration processes may have several advantages over traditional processes such as centrifugal separation. For example membrane filtration may facilitate high retention of contaminants, continuous operation, high throughput, easiness to scale up and to operate, small footprint and energy efficiency.

Ceramic membranes may further have the advantage of high mechanical stability. This may for example be an advantage in relation to membrane fouling, where ceramic membranes may be more robust towards chemical cleaning, backwash, and repeatable cleaning cycles.

Ceramic membranes such as silicon carbide (SiC) membranes are traditionally based on wet state processing, including suspensions of powders or particles that are shaped and subsequently fused or consolidated by sintering. Accordingly it is difficult to obtain ceramic membranes with sufficiently small and selective pore sizes for especially UF or NF processes, since the smaller the elements to be filtered out, the higher the demands imposed on the filter membranes used.

WO 2022/079676 describes generally that membranes with fewer defects, smoother surfaces, and more narrow pore size distribution may lead to reduced fouling and more efficient filters.

### Summary

The present disclosure provides a porous ceramic body particularly suitable for filtration processes, and providing surprisingly robust, stable, and efficient filtration.

The porous ceramic body comprises SiC and one or more further carbides or a further carbide precursor providing high mechanical and chemical stability and a tailored pore size distribution, specifically a defined narrow pore size distribution, facilitating efficient and robust filtration processes with high stability and durability. Accordingly, the porous ceramic body may be particularly suitable for ultrafiltration and nanofiltration, where the demands on the filtration selectivity are higher.

The porous ceramic body comprising SiC and one or more further carbides or further carbide precursor may further be obtained by cost efficient wet state ceramic processing and subsequent sintering.

A first aspect of the disclosure relates to a porous ceramic body comprising SiC and one or more further carbides or further carbide precursor configured as a silica scavenger sintering aid, and comprising a pore size distribution having a D90/D10 ratio equal to or below 1.4, more preferably equal to or below 1.3, and most preferably equal to or below 1.2.

A second and further aspect of the disclosure relates to a porous ceramic body comprising SiC and one or more further carbides or further carbide precursor configured as a silica scavenger sintering aid, and comprising pore size distribution wherein the difference between D90 and D10 is below 0.10, more preferably between 0.001-0.07, and most preferably between 0.01-0.05, such as 0.02, 0.03, or 0.04.

Advantageously, the porous ceramic body may be a membrane layer or selective layer in contact with and/or supported by a support layer and optionally an intermediate layer. Preferably, the support layer is pre-sintered before the deposition and sintering of the membrane layer, whereby it is found that a specific tailoring of the pore size distribution may be obtained, such a surprisingly narrow pore size distribution.

In a preferred embodiment of the disclosure, the porous ceramic body is configured as a membrane layer.

A third aspect of the disclosure relates to a method of producing a porous ceramic body, comprising the steps of:
a) providing a suspension of SiC particles and one or more further carbides or a further carbide precursor, wherein the further carbide(s) are configured as a silica scavenger sintering aid,
b) shaping the suspension into a body with a defined geometry,
c) drying the shaped geometry,
d) sintering the dried geometry at a temperature between 1500-1900 °C for 1.5 - 4 hours under inert atmosphere.

In a preferred embodiment, the porous ceramic body is deposited on a pre-sintered support.

In a preferred embodiment, the porous ceramic body according to the first and/or second aspect is configured to be produced by the method according to the third aspect.

In another preferred embodiment, the method according to the third aspect is configured to produce the ceramic body according to the first and/or second aspect.

A fourth aspect of the disclosure relates to a filter system comprising the porous ceramic body according to the first and/or second aspect, a feeding pipe for feeding liquid into the ceramic filter and/or a permeate pipe for withdrawing filtered liquid and at least one liquid pump connected to said feeding pipe and/or to said permeate pipe.

A fifth aspect of the disclosure relates to a method of filtering a liquid through a porous ceramic body according to the first and/or second aspect, or a filter system according to the fourth aspect, thereby obtaining a filtrate.

### Description of Drawings

The invention will in the following be described in greater detail with reference to the accompanying drawings.

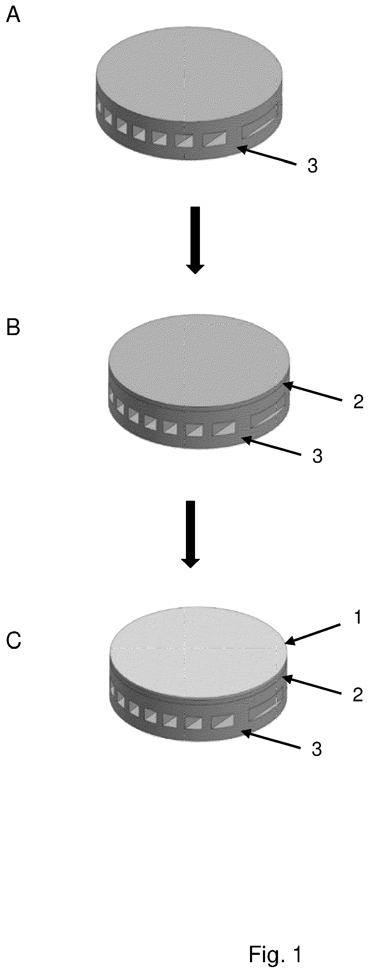

Figure 1 shows an embodiment of a ceramic body comprising a macro porous support layer **3,** an intermediate layer **2,** and a membrane or selective layer **1.** The layered structure may be obtained by coating the macro porous support with first the intermediate layer, and then the selective layer. The layers may be obtained via coating with a colloidal suspension of powders followed by sintering. The ceramic body may be applied in a flat sheet membrane with multiple channels, a tubular membrane with multiple channels (e.g. a honeycomb structure with multiple channels having e.g. 3 mm channels), or a tubular membrane or monotube, corresponding to a single channel.
Figure 2 shows micrographs of a first embodiment of a tubular SiC membrane without mixed carbides according to Example 2, observed at three positions of the layer: in (A), middle (B), and out (C).
Figure 3 shows micrographs of a second embodiment of a tubular SiC membrane with 4.6 mm channel according to Example 2, observed at three positions of the layer: in (A), middle (B), and out (C).
Figure 4 shows micrographs of an embodiment of a B₄C membrane according to Example 3, observed at three positions of the layer: in (A), middle (B), and out (C).
Figure 5 shows micrographs of an embodiment of a TiOz membrane according to Example 4, observed at three positions of the layer: in (A), middle (B), and out (C).
Figure 6 shows a pore size distribution of an embodiment of a SiC membrane of Example 2.
Figure 7 shows a pore size distribution of an embodiment of a B₄C membrane of Example 3.
Figure 8 shows a pore size distribution of an embodiment of a TiOz membrane of Example 4.
Figure 9 shows flux stability of embodiments of the membranes of Examples 2-4.
Figure 10 shows a setup for evaluating membrane flux or permeability as described in Example 1.

### Detailed description

The invention is described below with the help of the accompanying figures. It would be appreciated by the people skilled in the art that the same feature or component of the device are referred with the same reference numeral in different figures. A list of the reference numbers can be found at the end of the detailed description section.

### Definitions

The presently disclosed are described by use of the following terms.

### Filtration

By the term "filtration" is meant a separation process where an agent is removed from a feed medium, and/or an agent is enriched or upconcentrated within a feed medium. For example, the medium may be a waste fluid from a food process line or pharmaceutical production, where the waste fluid is filtered to remove toxic or active chemical agents before the fluids are discharged to the sewage system or recycled in the production.

### Membrane filtration

Filtration may be obtained via a membrane. Thus, the term "membrane filtration" refers to filtration across a semi-permeable membrane. The membrane may be in the form of a planar layer, or a cylindrical wall or cylindrical layer surrounding a lumen, also referred to as a monotube.

To improve the flux across the membrane, the membrane may be a thin layer which is structurally or mechanically supported by a thicker layer, also referred to as a support, as sketched in Figure 1. However, it is the porosity and pore sizes of the membrane that determines the size of the agents or particles that are removed in the filtration process. Accordingly, the membrane may also be referred to as the selective layer or the active filtration layer. The term "filter" is synonymously used to describe the selective membrane as well as a multilayered body comprising a membrane.

The feed medium may flow in parallel or tangentially to a surface of the semi-permeable membrane, e.g. within the lumen of the monotube. This configuration is also referred to as cross-flow or tangential flow, in contrast to dead-end flow where the feed medium flows perpendicular to the surface of the membrane. Due to the pressurization, the feed is separated into two streams or fractions: a permeate fraction passing through the membrane, and a retentate fraction rejected by the membrane.

A monotube or a multi-channelled tube with multiple channels have the advantage of being geometrically robust and simple to manufacture, and may further enable a relatively large contact surface area between the medium to be separated and the membrane. Accordingly, permeate is efficiently transferred and discharged via the membrane wall surrounding the lumens.

The filtration process may be defined according to the size of the agents or particles that are removed, corresponding to the pore sizes of the membrane. Microfiltration refers to pore sizes above around 0.1 µ, ultrafiltration refers to pore sizes between around 2-100 nm, and nanofiltration refers to pore sizes between around 1-2 nm.

### Pore size distribution and particle size distribution

Ceramic materials based on wet state processing are made from particulate powders and powder suspensions, which are subsequent sintering or fired, resulting in fusion of the particles, e.g. via solid state diffusion, into a bulk. Consequently, the particle sizes and pore sizes of ceramic materials are generally non-uniform. Thus, the porosity is typically evaluated based on the pore size distribution.

The term "pore size distribution" refers to the range of sizes that pores or openings within a material have. The pore size distribution is typically expressed in terms of the range of pore diameters present within the material. It can be described using various metrics, such as the mean pore size, median pore size, and the distribution's width. A narrow pore size distribution indicates that the majority of pores are close in size, while a broader distribution indicates a wider range of pore sizes. A unimodal pore size distribution indicates a material having one peak in the distribution, whereas a multimodal distribution has two or more peaks, e.g. a bimodal pore size distribution has two peaks, and a trimodal pore size distribution has three peaks.

The term "particle size distribution" refers to the range of sizes that particles in a material or suspension have. Particle size distribution is typically expressed in terms of the range of particle diameters present within the material. It can be described using various metrics, such as the mean particle size, median particle size, and the distribution's width. A narrow particle size distribution indicates that the majority of particles are close in size, while a broader distribution indicates a wider range of particle sizes.

Particle or pores size distribution can be characterized by the percentiles of diameters of pores or particles, respectively, in the population. For example by identifying the sizes that correspond to the 10^{th}, 50^{th} or 90^{th} percentile within the population of pores and sizes. In general, the size corresponding to the X percentile within a population is define as "dX" or "DX". For example:
- d50 or D50 (50^{th} percentile): Also known as median particle or pore size, is the size below which 50% of the pores or particles are smaller and 50% of the pores or particles are larger. It's the size that divides the population into two equal sizes.
- d10 or D10 (10^{th} percentile): is the particle or pore size below which 10% of the particles or pores in the distribution are smaller. In other words, 10% of the particles or pores have sizes equal to or less than the d10 value.
- d90 or D90 (90^{th} percentile): is the particle or pore size below which 90% of the particles or pores in the distribution are smaller. In other words, 90% of the particles or pores have sizes equal to or less than the d90 value.

Particle size and particle size distribution can be determined in multiple ways as it will be known to someone of skill in the art. For example: Dynamic light scattering (DLS), laser diffraction, sieve analysis, electron microscopy or imaging techniques.

Pore size and pore size distribution can be determined in multiple ways as it will be known to someone of skill in the art. For example: capillary flow porometry, liquid intrusion porosimetry, gas adsorption, such as BET among others.

A pore is typically not spherically shaped, and unambiguously defined by its diameter or radius. In most cases, the pore is not spherical, and will instead form an irregular, interconnected network with neighbouring pores. Thus, when applying the common techniques as known to the skilled person for evaluating pore sizes, the pore size is often quantified in terms of a representative pore diameter or pore cylinder diameter, such as the average pore/cylinder diameter. For example, the size of non-spherical pore may be quantified as the diameter of an equivalent sphere or cylinder, such as the sphere/cylinder having the same volume or surface area as the non-spherical pore. Alternatively, the pore size may be measured indirectly by the gas pressure required to displace a liquid within a pore, as measured by capillary flow porosimetry and Young-Laplace formula. Despite this is not a proper quantification from a geometrical point of view, it is applied to provide a quantitative description of the characteristic sizes.

By the terms dX, DX, or "mean pore size" or average pore size is meant the pore sizes as measured and calculated by capillary flow porosimetry, mercury porosimetry or gas adsorption, such as nitrogen BET. Preferably the average pore size is measured by capillary flow porometry due to the simple and environmental friendly technique.

### Porosity and flux

By the term "porosity" is meant the void fraction in a material. The porosity includes closed porosity, which is pores not accessible from the surface, and open porosity which is percolating and accessible from the surface. Accordingly, the open porosity forms a 3-dimensional network of interconnected and percolating pores, surrounded by a web or framework of solid material.

Permeate is transferred through the open porosity of a membrane. Hence, the membrane performance, and particularly the possible permeate flux, will increase with increasing porosity. In addition to the porosity, the surface area of the membrane, also influences on the possible permeate flux. A membrane porosity may be between 35-70 vol% and the absolute surface area between 0.05-10 m² to provide a high flux and sufficient mechanical strength.

By the term porosity is meant the open porosity as measured by capillary porosimetry, capillary flow porometry, and/or mercury porosimetry, and preferably by capillary flow porometry due to the simple and environmental friendly technique.

By the term absolute surface area is meant the absolute surface area of the actual membrane structure, as measured by gas adsorption, such as nitrogen BET.

### Silicon carbide (SiC)

By the term "carbide" is meant a compound composed of carbon and a metal. Examples of carbides include silicon carbide (SiC), boron carbide (B₄C or B4C), titanium carbide (TiC), zirconium carbide (ZrC), and tungsten carbide (WC). Carbides may have refractory properties, and may thus be suitable for ceramic wet state processing including sintering.

A ceramic body consisting of SiC or comprising a majority of SiC may be referred to as "silicon carbide".

Membranes comprising mainly SiC may provide high efficiency and selectivity for filtration due to the SiC surface properties, particularly the surface charge and hydrophilicity, thereby improving flux and providing a less energy intensive separation with less shear damage. SiC has a relatively low environmental impact for the ceramic production, and SiC provides durability and long operational lifetime to the membrane, because the material has a high fouling resistance, e.g. the growth of thermophilic bacteria may be suppressed. Further, SiC surfaces have a high cleanability in many fluids, due to the negative surface charge or zeta potential when exposed to the fluids. The longer lifetime of the SiC based membranes further contributes to the low environmental impact.

Accordingly ceramic bodies and SiC membranes comprise a high SiC content, such as between 50-100 wt% silicon carbide, and more preferably between 70-99.9 wt% or 80-99.5 wt% silicon carbide, and most preferably comprises between 90-99 wt%, 92-98 wt%, or 94-96 wt% silicon carbide, such as 95 wt% silicon carbide.

In addition to SiC, ceramic SiC bodies and SiC membranes may comprise ceramic metal oxides, such as zirconia (ZrO₂), doped zirconia and/or stabilised zirconia, such as yttria- and/or ceria stabilised zirconia, titanium dioxide (TiO2 or TiO₂), alumina (Al₂O₃). The ceramic metal oxide may further improve the chemical resistance of the ceramic body, and e.g. make it more resistant to acidic and/or basic fluids.

In addition to SiC, ceramic SiC bodies and SiC membranes may comprise a further carbide, which is not SiC. Such bodies are accordingly termed "mixed carbides".

### Sintering aid

By the term "sintering aid" or sintering additive is meant a compound which is configured to facilitate a sintering process, particularly to enhance the densification upon sintering. Accordingly a sintering aid is a functional additive or dopant promoting grain growth. A compound may be configured as a sintering aid by being added in certain amounts and/or by being added in a certain form, such as a certain precursor and/or a degree of dispersion.

By the term "silica scavenger sintering aid" is meant a sintering aid, which is further configured to facilitate a sintering process by acting as a silica scavenger, meaning that it removes silica impurities present in the particles, such that the solid state diffusion of the sintering process is improved.

### Mixed carbides with defined pore size distribution

Porous ceramic bodies facilitating surprisingly robust, stable, and efficient filtration processes may be obtained based on mixed carbides comprising SiC and one or more further carbides, such as B₄C or TiC, or one or more further carbide precursors, such as TiOz. By the term "precursor" is meant a compound that may be converted into a carbide under sufficient sintering conditions. Specifically it is seen that ceramic bodies comprising SiC and a further carbide or carbide precursor configured as a sintering aid may provide high mechanical and chemical stability in combination with and a tailored pore size distribution, specifically a defined or predefined narrow pore size distribution, where the narrow pore size distribution is defined by the D90/D10 ratio and/or the D90-D10 difference.

Thus, it was surprisingly found that mixed carbides may include carbides as sintering aids, where the sintering aids not only act as densification aids, but also as aids for controlling the porosity to a defined or predefined degree. Accordingly, the mixed carbides provided improved membrane surface roughness and pore size distribution, resulting in a more stable membrane with reduced fouling.

In an embodiment of the disclosure, the porous ceramic body comprises SiC and one or more further carbides or further carbide precursor configured as a sintering aid, and comprising a pore size distribution having a D90/D10 ratio equal to or below 1.4, more preferably equal to or below 1.3, and most preferably equal to or below 1.2.

In an alternative or further embodiment, the porous ceramic body comprises SiC and one or more further carbides or further carbide precursor configured as a sintering additive, and comprising a pore size distribution wherein the difference between D90 and D10 is below 0.10, more preferably between 0.01-0.05, such as 0.02, 0.03, or 0.04.

Advantageously, the porous ceramic body may be a membrane layer or selective layer in contact with and/or supported by a support layer and optionally an intermediate layer. Preferably, the support layer is pre-sintered before the deposition and sintering of the membrane layer, which may facilitate a specific tailoring of the pore size distribution. For example, a surprisingly and defined narrow pore size distribution of the membrane layer may be obtained. By the term "pre-sintered" is meant that the support has been subjected to a sintering or firing step.

In an embodiment of the disclosure, the porous ceramic body is configured as a membrane.

In addition to being narrow, the tailored pore size distribution is advantageously further unimodal, thereby providing a highly uniform porosity. The uniform porosity is reflected by the ceramic body having a surprisingly low surface roughness and few surface defects following sintering, such that post sintering treatments such as polishing and sealing may be avoided. The uniform porosity is further reflected by the ceramic body having a defined and stable flux, of e.g. water permeance, with reduced fouling and more efficient filtering.

In an embodiment of the disclosure, the pore size distribution is unimodal.

To further facilitate efficient, robust, and stable filtration, the porous ceramic body is advantageously essentially free of free carbon (C), and/or substantially free of silica (SiO₂). The wet state ceramic processing involves organic compounds such as dispersants and binders, which decompose into free carbon residues during sintering in inert atmosphere, and the residues may block the porosity. Further, commercial SiC powders comprise a significant amount of silica, and particularly silica present on the particle surfaces may prevent efficient sintering due restricted solid state diffusion. It is surprisingly seen that higher silica contents may be tolerated in the presence of certain silica scavenger sintering aids.

In an embodiment of the disclosure, the body is substantially free of free carbon, or having a content of free carbon of below 1, 3, 5, 7, or 10 wt%. In a further embodiment of the disclosure, the body is substantially free of silica. In another embodiment of the disclosure, the body comprises a silica content between 0.5-5 wt%, more preferably between 1-4 wt%, most preferably between 1.5-2 wt%, such as 1.4 wt% or 1.8 wt%.

It is further surprisingly found that further carbides configured as sintering aids, and further configured as silica scavengers, may provide high mechanical and chemical stability in combination with and a precisely defined and tailored pore size distribution, specifically a defined narrow pore size distribution. By the term "silica scavengers" is meant a substance capable of removing or de-activating silica impurities present in the SiC powder. Examples of carbides configured as silica scavengers include B₄C, where the carbon part is expected to act as silica scavenger. Another example is TiC, and specifically the carbide precursor titania (TiO₂) which may react with the carbonaceous residues or carbonaceous decomposition products during the sintering process. The titania may be partially orcompletely converted to TiC, and both the TiO₂/TiC and carbon may act as a sintering aid and silica scavenger. Similar silica scavenger sintering aids include zirconium carbide (ZrC), tungsten carbide (WC).

In an embodiment of the disclosure, the one or more further carbides are selected from the group of silica scavenger sintering aids configured for improving solid state diffusion in SiC. In a further embodiment, the one or more further carbides are selected from the group of: boron carbide (B₄C), titanium carbide (TiC), zirconium carbide (ZrC), tungsten carbide (WC), and any combinations thereof, and preferably is boron carbide (B₄C) and/or titanium carbide (TiC). In a preferred embodiment, the one or more further carbides are boron carbide (B₄C), titanium carbide (TiC), zirconium carbide (ZrC), or tungsten carbide (WC).

To facilitate efficient, robust, and stable filtration, the porous ceramic body is advantageously comprises a higher amount of SiC, and minor amount of the further carbides. Specifically high amounts of further carbides acting as sintering aids may result in a non-well defined pore size distribution due to excessive densification. A defined pore size distribution may be obtained for further carbides in amounts between 0.1-50 wt%, for example 7 wt% B₄C or 7.5 wt% TiC.

In an embodiment of the disclosure, the porous ceramic body comprises between 50-99.9 wt% SiC, more preferably between 58-99.5 wt% or 60-99 wt% SiC, and most preferably between 70-98 wt%, 80-95 wt%, or 85-90 wt% SiC. In a further embodiment, the body comprises between 0.1-50 wt% further carbides, more preferably between 1-45 wt% or 2-40 wt% further carbides, and most preferably between 3-30 wt% further carbides, such as 5, 10, 15, 20, 25 wt% further carbides.

In an embodiment of the disclosure, the porous ceramic body comprises between 2-20 wt% boron carbide, more preferably between 3-15 wt% or 4-12 wt% boron carbide, and most preferably between 5-10 wt% boron carbide, such as 6, 7, 8, or 9 wt% boron carbide. In a further or alternative embodiment, the porous ceramic body comprises between 0.5-20 wt% TiC, more preferably between 1-10 wt% TiC, such as 7.5 wt% TiC.

It was found that specific tailoring of the pore size distribution may be obtained for membrane layers in contact with and/or supported by a pre-sintered support layer, such as a pre-sintered macroporous SiC support. For example, surprisingly narrow pore size distributions may be obtained for membrane layers comprising 7 wt% boron carbide and/or between 1-10 wt% TiC, as further described in Examples 1-4.

In an embodiment of the disclosure, the porous ceramic body is configured as a membrane and comprising 7 wt% boron carbide.

In a further or alternative embodiment of the disclosure, the porous ceramic body is optionally a membrane comprising between 1-10 wt% TiC.

Advantageously, the porous ceramic body is obtained from sintering a mixture comprising SiC particles and a further carbide precursor, such as titania. If was found that titania particles having an average particle size sufficiently low to obtain complete conversion into TiC during sintering resulted in particularly defined and uniform porosity. For example nano sized titania particles, which are stabilized by a dispersant to avoid agglomeration, may ensure complete conversion and provide controlled porosity. XRD measurements show that complete TiC conversion at the kinetic conditions of the sintering may be obtained for titania particles and/or agglomerates with an average particle size between 20-100 nm and/or a specific surface area of between 200-400 m2/g.

In an embodiment of the disclosure, the porous ceramic body is obtained from sintering a mixture comprising SiC particles and titania (TiO₂) particles, wherein the titania particles have an average particle size and/or specific surface area configured to convert into TiC during sintering. In a further embodiment,, the titania particles have an average particle size between 20-100 nm and/or a specific surface area of between 200-400 m2/g, more preferably between 250-350 m2/g, such as 300 m2/g. In a further embodiment, the titania particles in the mixture are provided as a stabilized suspension, e.g. stabilized by a suitable dispersant, such as diethylamine.

It is found that the sintering additives may further facilitate tailoring of the pore size distribution of individually sintered support layers, such as a pre-sintered macroporous SiC support. Accordingly a similar narrow pore size distributions may be obtained for macroporous supports comprising SiC and one or more further carbides or further carbide precursor, e.g. B₄C and TiO₂/TiC, as further describe in Examples 5-6. The pre-sintered support may subsequently be used for supporting the green deposited intermediate layers and/or membrane layers, which are then sintered in a further sintering step(s). Support layers, such as monoliths, may be structures of larger dimensions, and accordingly the temperature distribution during the pre-sintering step may be uneven. However, it is indicated that the presence of the sintering additives in the support may result in more homogeneous sintering, resulting in the narrow pore size distribution.

In an embodiment of the disclosure, the porous ceramic body is configured as a support in contact with one or more intermediate layers and/or membranes.

### Mixed carbides manufacture

The mixed carbides are advantageously manufactured by environmental friendly and cost efficient wet state ceramic processing, based on suspensions of the SiC particles or powders, and mixed suspensions of SiC powder and the further carbides or further carbide precursors. Advantageously, the suspensions are stable suspensions also referred to as stable slurries or pastes, where the suspended particles are stabilized in suspension by the presence of dispersants and/or binders providing steric and/or electrostatic stabilisation. The suspension is shaped into a green ceramic body with a selected and predefined geometry, and the green ceramic body dried to remove the majority of the solvents from the suspension, and then the geometry is consolidated by sintering at elevated temperatures into a fired or final ceramic body.

In an embodiment of the disclosure, the method comprises the steps of:
a) providing a suspension of SiC particles and one or more further carbides or a further carbide precursor, wherein the further carbide(s) are configured as a silica scavenger sintering aid,
b) shaping the suspension into a body with a defined geometry,
c) drying the shaped geometry,
d) sintering the dried geometry at a temperature between 1500-1900 °C for 1.5 - 4 hours under inert atmosphere.

The presence of one or more further carbides or further carbide precursors configured as sintering aids, and further configured as silica scavengers, may facilitate that SiC powders of lower purity, and particularly surprisingly higher amounts of silica impurities, may be used for the production of membranes.

In an embodiment of the disclosure, the SiC particles have a purity degree including a silica content between 0.5-5 wt%, more preferably between 1-4 wt%, most preferably between 1.5-2 wt%, such as 1.4 wt% and/or 1.8 wt%.

To obtain a fired or final ceramic body with particular predefined porosity facilitating efficient and stable filtration, the suspensions of SiC powder and the further carbides or further carbide precursors are advantageously uniform mixed and the particles or powders stabilised in the suspensions. Particularly uniform and stabilised suspensions may be obtained with mixtures of SiC and a further carbide precursor, such as titania. For example, the titania may advantageously be provided into the suspension as a precursor suspension of titania particles and/or agglomerates having an average size of between 20-100 nm.

In an embodiment of the disclosure, the further carbide precursor is titania particles with with an average size between 20-100 nm and/or a specific surface area of between 200-400 m2/g, more preferably between 250-350 m2/g, such as 300 m2/g. In a further embodiment, the titania particles are provided as a stabilized suspension, e.g. stabilized by a dispersant, such as diethylamine.

To facilitate efficient mixing and sintering of SiC and the further carbides, the SiC particles are advantageously a defined powder mixture.

In an embodiment of the disclosure, the SiC particles comprise a mixture of two sub-micron powders in a mixture ratio of 1:1, wherein the first sub-micron powder has a first average particle size, and the second sub-micron powder has a second average particle size. In a further embodiment, the ratio between the first and second average particle sizes is between 0.20 - 0.90, more preferably between 0.30 - 0.80, and most preferably between 0.35 - 0.75, such as 0.40, 0.50, or 0.60.

The wet state ceramic processing provides flexible shaping into a targeted geometry. Further particularly well-defined and thin layers may be obtained, which are suitable for membranes. For example, thin membrane layers may be obtained by dip coating onto a support, and depending on the support the membrane may be shaped into a planar layer or disc, a monotube, a multichannel, and combinations thereof.

In an embodiment of the disclosure, the suspension is shaped by a technique selected from the group of: dip coating, spraying, tape casting, lamination, extrusion, and combination thereof. In a further embodiment, the suspension is shaped into a geometry selected from the group of: layer, intermediate layer, support. In a further embodiment, the suspension is shaped as a layer, a disc, a monotube, a multichannel, and combinations thereof.

The shaped green ceramic body is dried to remove the majority of the solvents from the suspension, and then the geometry is consolidated by sintering into the final ceramic body. The heat treatment affects the stability of the shaped geometry, and may further affect the pore size distribution of the final ceramic body. Particularly, the drying and sintering rate may affect the amount of defects, the uniformity of resulting porosity, and the presence of e.g. carbon residues blocking the porosity. The sintering may further be configured to facilitate partial or complete conversion of into a further carbide.

In an embodiment of the disclosure, the sintering is carried out at a temperature between 1500 - 1900 °C for 1.5 - 4 hours under inert atmosphere, such as argon (Ar) and/or nitrogen (N2)..

During the subsequent carbon removal step, there is a risk of the B₄C being oxidized to boria (B2O3). Thus, the carbon removal step is advantageously modified to be carried out in less oxidative atmospheres to avoid or reduce the boron oxidation, e.g. by reducing the maximum temperature, and/or by chemical treatment.

The method is advantageously used for producing a membrane layer or selective layer in contact with and/or supported by a support layer and optionally an intermediate layer, and preferably, the support layer is pre-sintered before the deposition and sintering of the membrane layer. This facilitates that a specific tailoring of the pore size distribution may be obtained. For example, the pre-sintered support may be a commercially available SiC macroporous support layer, such as a monolith, as shown in Figure 1 and further described in Example 2. The SiC macroporous support is typically pre-sintered at temperatures between 1900-2200°C, such as 2000 or 2100°C, and the membrane suspension is accordingly deposited on the pre-sintered support layer before the membrane layer is dried and sintered.

In an embodiment of the disclosure, the porous ceramic body is deposited on a pre-sintered support.

### Filter system

The porous ceramic body is particularly suitable for filtration processes. The body comprising mixed carbides may be configured or dimensioned as a membrane layer, an intermediate layer, or a support, and any combinations thereof, as illustrated in Figure 1. Figure 1 shows an embodiment of a ceramic body, which may be a filter, comprising a macro porous support layer 3, an intermediate layer 2, and a membrane or selective layer 1. The layered structure may be obtained by coating the macro porous support with first the intermediate layer, and then the selective layer. The layers may be obtained via coating with a colloidal suspension of powders followed by sintering. It follows that each layer may be produced from multiple individual layers. For example, the support may be based on multiple support layers, the intermediate layer based on multiple intermediate layers, and the membrane based on multiple membrane layers.

Accordingly, one or more of the layers may comprise mixed carbides, and for example all the layers may comprise mixed carbides. Alternatively, only selected layers comprise mixed carbides. For example, the membrane may comprises mixed carbides, and be supported by a SiC support, and optionally a SiC intermediate layer, where the support and intermediate layer do not comprise mixed carbides, as further described in Example 1.

In an embodiment of the disclosure, the porous ceramic body is configured as a membrane, an intermediate layer, and/or a support, and combinations thereof. In a further embodiment, the membrane comprises one or more supports, one or more intermediate layers, one or more membranes, and combinations thereof.

A filter system may in addition to the filter or membrane comprise additional parts, such as a piping system for feeding the filter and discharging the permeate and/or retentate. For example, the system advantageously include at least one feeding pipe and at least one permeate pipe. The area of the filter where the feed is introduced may be referred to the inlet or in position, and the area of the filter where the filtered liquid is removed may be referred to as the outlet or out position, and in-between is the middle position.

In an embodiment of the disclosure, the filter system comprises the porous ceramic body according to the present disclosure, a feeding pipe for feeding liquid into the ceramic filter and/or a permeate pipe for withdrawing filtered liquid and at least one liquid pump connected to said feeding pipe and/or to said permeate pipe.

The piping system may be configured to provide an inflow and outflow configured for cross-flow or dead-end filtration. The piping system may further be configured to provide a determined pressure difference across the membrane or filter by use of a pump, such as a liquid pump, whereby a primed water flux of at least 400 L h⁻¹ m⁻² bar ¹, may be obtained.

In an embodiment of the disclosure, the filter system and/or the porous ceramic body is configured for cross-flow filtration or dead-end filtration.

In an embodiment of the disclosure, the filter system comprises a liquid pump arranged to provide a pressure difference over the porous ceramic body to provide a liquid flow from a filter inflow end to a filter outflow end, wherein the liquid flow preferably has a primed water flux of at least about 400 L h⁻¹ m⁻² bar⁻¹, measured at 25 °C and at a pressure difference where delta P is a linear function to the flux, preferably the primed water flux between about 400 to 600 L h⁻¹ m⁻² bar⁻¹.

The ceramic body of the present disclosure is particularly suitable for filtration of aqueous suspensions due to provided porosity, pore size distribution, and flux. Specifically aqueous suspensions comprising insoluble contaminants, such as particulate contaminants in the submicron range.

In an embodiment of the disclosure, the filter system and/or the porous ceramic body is configured for a method of filtering a liquid through a porous ceramic body. In a further embodiment, the liquid is an aqueous suspension comprising contaminates which are substantially insoluble in said liquid.

### Membrane configuration

As described above, the porous ceramic body may be configured as a membrane. Advantageously, the membrane is shaped as a membrane layer supported by one or more intermediate layers, and/or one or more supports, as indicated in Figure 1. Accordingly, the membrane layer is in contact with and abutting at least one of the additional layers. For example, the membrane may be superjacent to the support and intermediate layer, and form a planar boundary or interface to the intermediate layer, as shown in Figure 1.

In an embodiment of the disclosure, the porous ceramic body is configured as a membrane, optionally in contact with one or more intermediate layers and/or support.

For efficient and stable aqueous filtration of non-soluble contaminants, the membrane porosity is advantageously characterised by a D50 equal to or below 260 nm, and/or a maximum pore size equal to or below 450 nm. The porosity characteristics including the pore size distribution may be measured by capillary flow porometer, configured to provide efficient and reproducible measurements.

In an embodiment of the disclosure, the D50 is equal to or below 290 nm, more preferably between 50-280 nm or 100-250 nm, and most preferably between 110-230 nm, such as 150, 160, 170, or 180 nm. In a further embodiment, the maximum pore size is equal to or below 370 nm, more preferably equal to or below 350 nm or 300 nm, such as 250 nm, 225 nm, or 200 nm. In an embodiment of the disclosure, the pore size distribution is measured by capillary flow porometer.

To provide sufficient flux across the membrane, the membrane is advantageously a thin layer with an average thickness between 10-100 µm, which optionally is structurally or mechanically supported by a thicker layer, such as a macro porous support with high porosity and flux. In an embodiment of the disclosure, configured as a layer with an average thickness of between 10-100 µm, more preferably between 20-90 µm or 30-80 µm, and most preferably between 35-70 µm or 40-60 µm.

### Support configuration

As described above, the porous ceramic body may be configured as a support. Advantageously, the support is supporting one or more intermediate layers, and/or one or more membranes, as indicated in Figure 1. Accordingly, the support is in contact with and abutting at least one of the additional layers. For example, the support may abut a superjacent intermediate layer, and form a planar boundary or interface to the intermediate layer, as indicated in Figure 1. Alternatively, the support may abut a superjacent membrane layer, and form a planar boundary or interface to the membrane layer.

In an embodiment of the disclosure, the porous ceramic body is configured as a support, optionally in contact with one or more intermediate layers and/or membranes.

For efficient and stable aqueous filtration of non-soluble contaminants, and to ensure the support is not limiting the flux relative to the membrane, the support porosity is advantageously characterised with respect to the membrane. For example, the maximum pore size diameter of the support and the porosity of the support is advantageously larger.

In an embodiment of the disclosure, the support comprises a maximum pore size diameter which is equal to or larger than the maximum pore size diameter of the membrane, preferably wherein said support comprises a maximum pore size diameter which is substantially larger, such as at least 2 times larger than the maximum pore size diameter of the membrane.

In an embodiment of the disclosure, the support comprises a porosity which is equal to or larger than the porosity of the membrane, preferably wherein said support comprises a porosity which is substantially equal to the porosity of the membrane.

To reduce the filter complexity and the number of layer, the support may abut a superjacent membrane layer, and form a planar boundary or interface to the membrane layer. For example a support and/or a membrane comprising mixed carbides according to the present disclosure may facilitate that an intermediate layer may be avoided. For example, the membrane layer may be formed on a support surface by dip coating. The resulting interface may have a thickness due to the wet state processing, for example the membrane coating may be partly infiltrating the support, and the support may accordingly interpenetrate partly into the membrane. The thickness of the boundary accordingly corresponds to the infiltration depth.

In an embodiment of the disclosure, the support comprises at least one interface forming a common boundary to the membrane. In a further embodiment, the common boundary between the support and the membrane has a thickness which is less than about 10 µm, such as less than about 1 µm. In a further embodiment, the support interpenetrates partly into the membrane.

For efficient and flexible manufacturing, as well as to improve the flux of the support relative to the membrane, the support may advantageously comprise multiple support layers. Accordingly, a first support layer is in contact with and abutting a superjacent membrane, and the additional support layers are subjacent to the first support layer. Thus, the first support layer is sandwiched between the membrane and the additional support layers. Advantageously, the maximum pore size diameter and porosity of a subjacent layer are stepwise or gradually larger compared to a superjacent layer.

In an embodiment of the disclosure, the support comprises one or more supporting layers, wherein each layer has a thickness of about 1 µm or more, such as about 10 µm or more, such as about 50 µm or more, such as about 100 µm or more, such as about 200 µm or more, such as up to about 10 mm, such as from about 50 µm to about 5 mm.

In an embodiment of the disclosure, the support comprises a first support layer in contact with the membrane and a second support layer in contact with said first support layer, said first support layer having a maximum pore size diameter which is larger than the maximum pore size diameter of the membrane and said second support layer having a maximum pore size diameter which is larger than the maximum pore size diameter of the first support layer. In a further embodiment, the support comprises a first supporting layer in contact with the membrane and a second supporting layer in contact with said first supporting layer, said first supporting layer having a porosity which is substantially equal to or larger than the porosity of the membrane and said second supporting layer having a porosity which is substantially equal to or larger than the porosity of the first supporting layer.

The interface between a subjacent and superjacent support layer may be partly interpenetrated, and accordingly have a thickness defined by the infiltration depth.

In an embodiment of the disclosure, the support comprises at least one interface forming a common boundary between two different supporting layers, wherein the interface preferably has a thickness which is less than about 10 µm, such as less than about 1 µm.

### Intermediate layer configuration

As described above, the porous ceramic body may be configured as an intermediate layer or transition layer. Advantageously, the intermediate layer is sandwiched between a superjacent membrane and a subjacent support, as indicated in Figure 1. Thus, the intermediate layer is in contact with and abutting both the membrane and support. For example, the intermediate layer may form a first planar boundary or interface to the membrane, and a second planar boundary or interface to the support.

In an embodiment of the disclosure, the porous ceramic body is configured as an intermediate layer, optionally in contact with one or more supports and/or membranes.

### Reference numbers

1 - Membrane or selective layer
2 - Intermediate layer
3 - Support

### Examples

The invention is further described by the examples provided below.

### Example 1 - Mixed carbide layer

A porous ceramic body for filtration typically comprises one or more layers as shown in Figure 1. The body may comprise a separate and self-supported support **3** layer having sufficient thickness for self-support and mechanical handling (cf. Figure 1A). The thicker layer is supporting a thinner membrane **1** layer (cf. Figure 1C), optionally with an intermediate layer **2** sandwiched between the support and the membrane layer (cf. Figure 1B). The layered ceramic body may be applied or incorporated in any membrane geometry, e.g. in a flat sheet membrane with multiple channels as seen in Figure 1, or alternatively in a tubular membrane with multiple channels (e.g. a honeycomb or monolith structure with multiple channels having e.g. 3 mm channels), or a tubular membrane or monotube, corresponding to a single channel.

The porous ceramic body according to the present disclosure comprising mixed carbides may be configured or dimensioned as a membrane layer, an intermediate layer, a support, and combinations thereof. Thus, the ceramic body according to the present disclosure comprising mixed carbides may include one or more supports, one or more intermediate layers, one or more membranes, and combinations thereof.

In addition, the porous ceramic body according to the present disclosure comprising mixed carbides may be configured as a membrane layer supported by a SiC support, and optionally a SiC intermediate layer, where the support and intermediate layer do not comprise mixed carbides.

The SiC support without mixed carbides may be commercially available SiC multichannel tubular membranes (diameter of 25 mm, 30 channels, porosity of 40%, and pore size of 15 µm), supplied from LiqTech Ceramics A/S, Denmark. The support layer is thus a macro porous SiC, which is pre-sintered at temperatures between 1900-2100 °C, and the support layer may be coated with an intermediate layer and/or a membrane layer. Alternatively, a SiC support with any other geometry may be applied, e.g. multichannel tubular membranes with other channel number and dimensions (flat sheets as in Figure 1), honeycomb structures, or tubular supported membranes (monotube or multichannel).

The intermediate layer with or without mixed carbides may be deposited onto a SiC support with or without mixed carbides. The SiC support is dip coated into a colloidal SiC suspension with submicron SiC powders, and optionally a further carbide or carbide precursor. For example, an intermediate SiC layer was deposited by dip coating a SiC support into a colloidal suspension. This coating suspension was prepared by using a blend of fine (average particle size of 0.3 µm) and coarse (average particle size of 0.7 µm) α-SiC sub-micron powders (fine/coarse powder mixing ratio 1:1), a synthetic polyelectrolyte Produkt-KV5088 (1 wt.%) as a dispersant, polysaccharide dicarbonic acid polymer, optapix CS-76 (1 wt.%), as a binder, and distilled water.

After coating the SiC support, the SiC intermediate layers are sintered in the range of 1500 °C to 1900 °C for 1.5 - 4 hours under inert atmosphere, such as argon (Ar) and/or nitrogen (N2). Subsequently, the SiC membranes were heat treated under air to remove the free carbon eventually formed in the pores.

The membrane layer with or without mixed carbides may be deposited onto a SiC support with or without mixed carbides. Alternatively or additionally, the membrane layer with or without mixed carbides may be deposited onto an intermediate layer with or without mixed carbides. Thus, the membrane layer may be deposited on any combinations of a support and/or intermediate layer.

The SiC support with or without intermediate layer is dip coated into a colloidal SiC suspension with submicron SiC powders, and optionally a further carbide or carbide precursor. For example, the coating suspension may be prepared by using a blend of fine (average particle size of 0.3 µm) and coarse (average particle size of 0.7 µm) α-SiC sub-micron powders (fine/coarse powder mixing ratio 1:1), a synthetic polyelectrolyte Produkt-KV5088 (1 wt.%) as a dispersant, polysaccharide dicarbonic acid polymer, optapix CS-76 (1 wt.%), as a binder, and distilled water.

After coating the membrane layer, the layer is sintered in the range of 1500 °C to 1900 °C for 1.5 - 4 hours under inert atmosphere, e.g. argon (Ar) and/or nitrogen (N2).

Subsequently, the layered body is heat treated under air to remove free carbon which may be formed during the sintering in inert atmosphere, referred to as the carbon removal step.

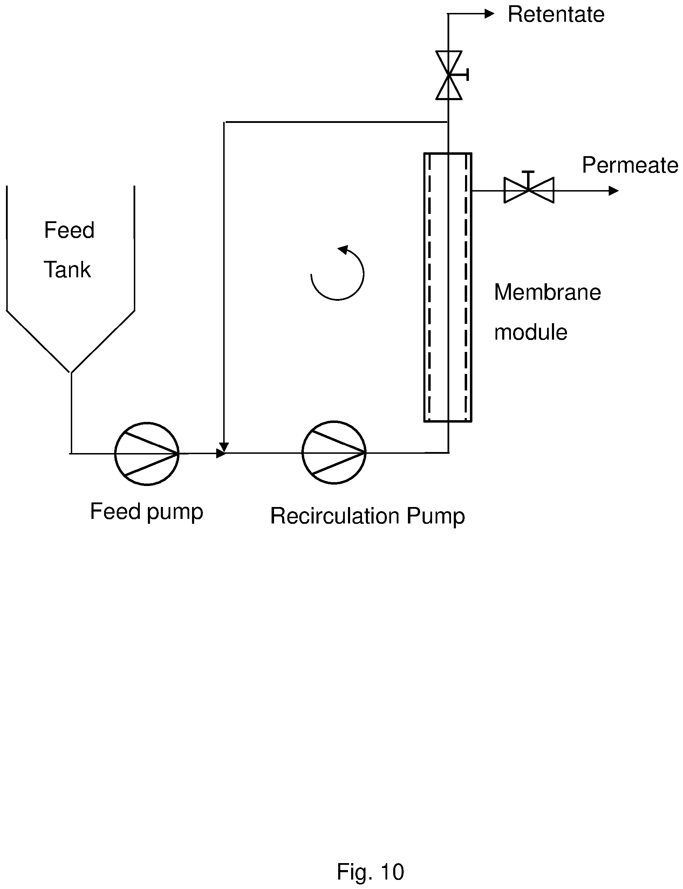

The resulting layer(s) may be characterized by:
- Layer thickness evaluated by micrometer screw gauge or scanning electron microscopy (SEM).
- Surface roughness evaluated by scanning electron microscopy (SEM).
- Pore size distribution (PSD) evaluated by capillary flow porometer (CFP).
- Flux stability evaluated by use of the setup shown in Figure 10, where the permeability in liter per m2*h*bar and flow in liter per m2*h at a pressure of 1, 2, 3 bars, where measured as a function of time.

### Example 2 - SiC membrane without mixed carbide

A silicon carbide (SiC) membrane essentially without the addition of further carbides was prepared for comparison. The SiC membrane layer may be deposited on a pre-sintered macroporous SiC support. The comparative membrane was prepared using the materials and methods described further below.

### Materials and methods

A blend of two SiC sub-micron powders, where the SiC is primarily polymorph α-SiC, was purchased from ESK, Germany. The first powder comprises an average particle size of 0.3 µm with a silica impurity amount of 1.8 wt%. The second powder comprises an average particle size of 0.7 µm with a silica impurity amount of 1.4 wt%.

As dispersing agent for SiC powders, Produkt-KV5088 (PKV, a commercially available polyelectrolyte as in Example 1), was supplied by Zschimmer & Schwarz.

As binder, Optapix CS-76 (polysaccharide dicarbonic acid polymer) was obtained from Zschimmer & Schwarz, Germany. All chemicals were used as received.

For the preparation of SiC selective membrane layer, coating suspensions were prepared using SiC powders, dispersant, binder, and deionized water kept under continuous mechanical stirring with propeller (LLG-uniSTIRRER OH2).

Suspensions prepared with a powders mixing ratio of 1:1.

The solid load of the powder was between 15-25 wt% compared to the total slurry.

All suspensions were prepared using the following sequential addition protocol. First, deionized water and dispersant (1 wt%) were mixed in a beaker, the SiC powder was then added and the suspension was mixed for 5 min. This was followed by a 20 min ultrasound treatment at 75 W (Hielscher Ultrasonic Homogenizer *UIP2000hdT).*

After ultrasound tratment, 1 wt% optapix CS 76 was added to the suspension. The suspension was further stirred continuosly with a magnetic stirrer at room temperature. The slurry was mixed such that the SiC powder is deagglomerated into the original particle sizes, and the original particle sizes not further comminuted.

The suspension was coated onto a support layer, and/or optionally an intermediate SiC layer by dip-coating.

The membrane was sintered at a temperature between 1500 - 1900°C for 1.5 - 4 hours under inert atmosphere (argon and/or nitrogen). The membrane was subsequently heat treated at 400-1100°C for 1-5 hours under air to remove the free carbon (e.g. from the organic based dispersant and/or binder), which optionally are present as free carbon, carbonaceous residues or carbonaceous decomposition products following the sintering process. This step is also referred to as the carbon removal step or process. The carbon removal may improve the wetting properties and the hydrophilicity of the membrane.

The resulting SiC membrane was characterized with regards to the membrane thickness, surface, pore size distribution, and flux.

### Results

The resulting membrane layer thickness was evaluated at three positions (in, middle, out) on the membrane. The SiC membranes were seen to have a uniform thickness.

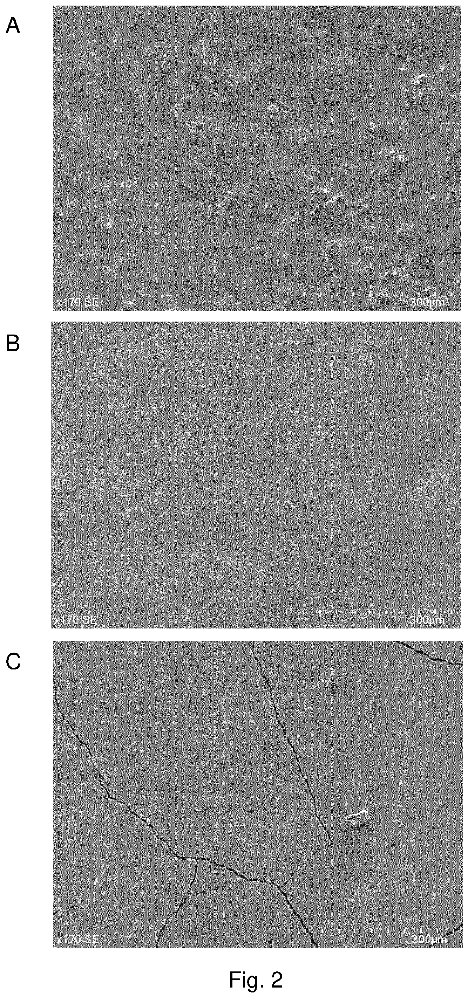

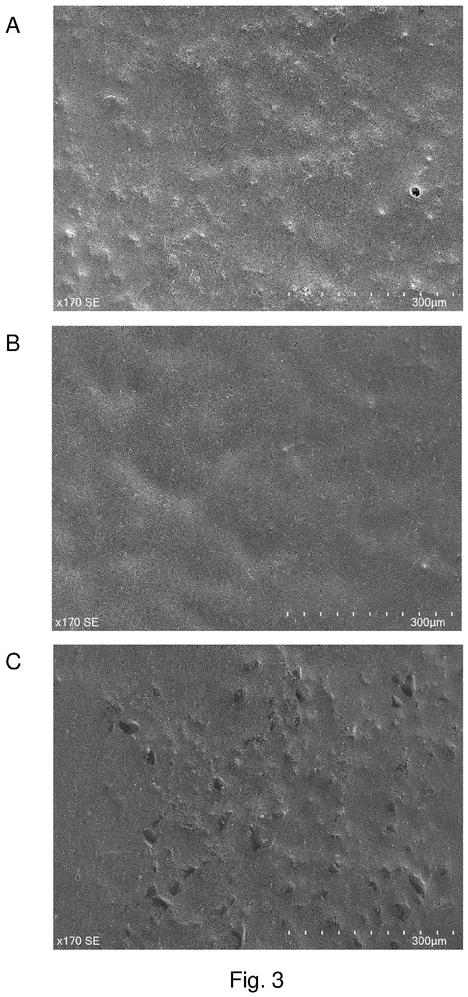

Figures 2-3 show SEM micrographs of embodiments of the SiC membrane of Example 2. Figure 2 shows a first embodiment based on a tubular SiC membrane, and Figure 3 shows a second embodiment based on a tubular SiC membrane with 4.6 mm channel. For both embodiments, the surface roughness was evaluated at three positions: in (A), middle (B), and out (C). The surface was seen to include defects and high roughness especially at the in and out positions (cf. Figures 2A, 2C, 3A, 3C).

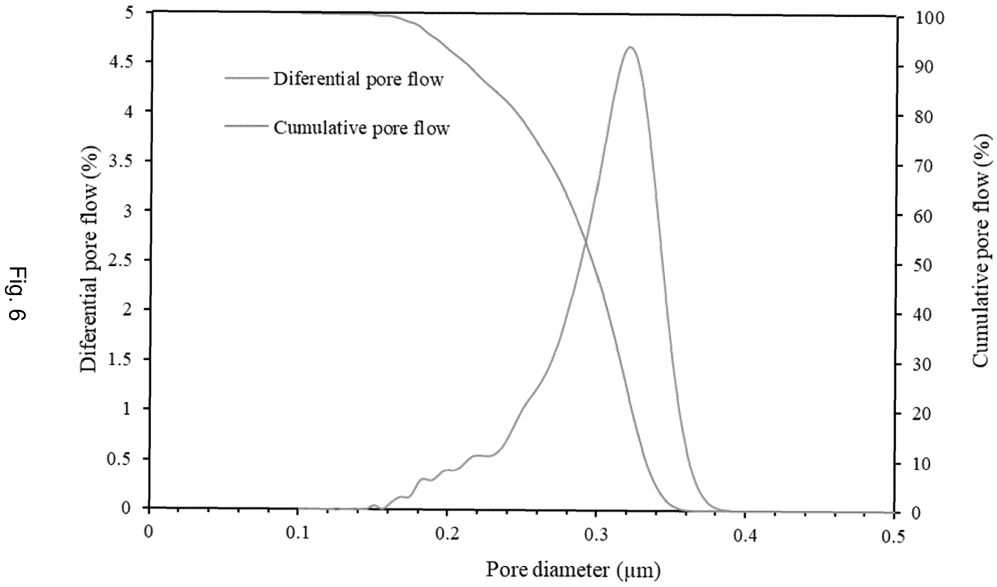

Figure 6 shows a characteristic pore size distribution of a SiC membrane of Example 2, and pore size distribution percentiles d90, d50, d10 are summarized in Table 1 based on at least two measurements.

**Table 1. Pore size distribution for Examples 2-4.**

| | **Example 2 - SiC** | | **Example 3 - B₄C** | | **Example 4 - TiOz** | |
|---|---|---|---|---|---|---|
| | (µm) | µm) | (µm) | (µm) | (µm) | (µm) |
| D10 | 0.280 | 0.210 | 0.148 | 0.148 | 0.170 | 0.165 |
| D50 | 0.340 | 0.295 | 0.160 | 0.160 | 0.181 | 0.178 |
| D90 | 0.396 | 0.333 | 0.173 | 0.173 | 0.198 | 0.188 |
| **D90-D10** | **0.12** | **0.12** | **0.02** | **0.02** | **0.03** | **0.02** |
| **D90/D10** | **1.4** | **1.6** | **1.2** | **1.2** | **1.2** | **1.1** |

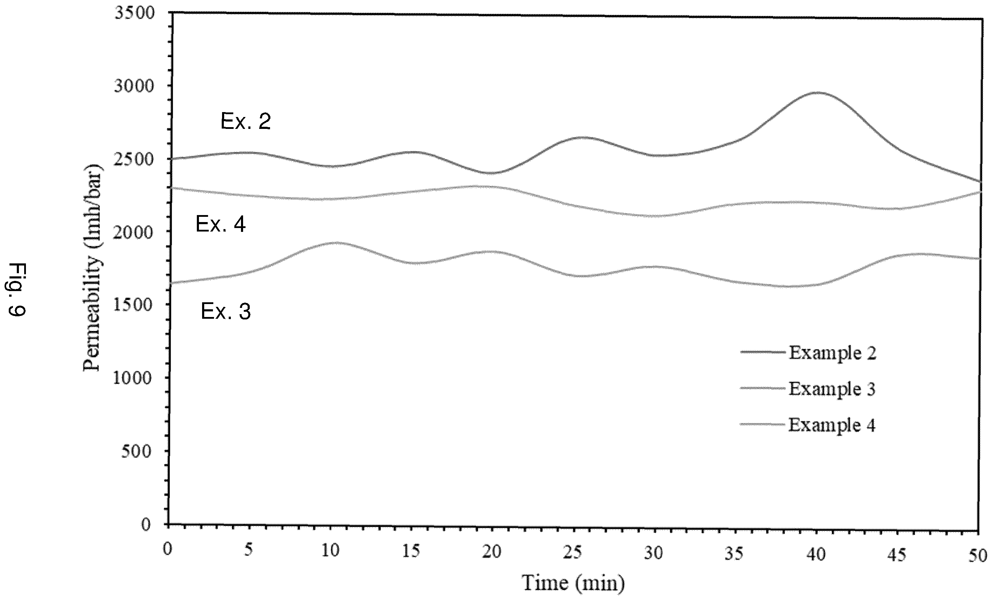

Figure 9 shows the flux stability of a SiC membrane of Example 2 (upper curve). The resulting membrane flux or permeability was evaluated by a commercial pilot-scale filtration set-up, the so-called Liqtech LabBrain The unit consists of a feed tank, a feed pump, a recirculation pump, a membrane module, as shown schematically in Figure 10. The membranes were sealed using silicon O-rings and placed in a cross-flow stainless-steel module. Pure deionized water experiments were carried out at constant transmembrane pressure of 0.4 bar and a cross flow of 2400 l/h for 10 minutes. The permeate flux was measured gravimetrically. Membrane permeance was determined by dividing the flux by the transmembrane pressure

The SiC membrane of Example 2 (upper curve) shows lower stability and higher fluctuations, which is ascribed to a higher fouling rate.

### Example 3 - SiC-B₄C membrane

The same materials and methods as for Examples 1-2 were applied, except that the slurry was modified to include B₄C. This was obtained by adding 7 wt% B₄C or boron carbide without graphite impurities (from Höganäs) to the SiC mixture. Dispersant/binder system was the same as in Examples 1-2.

### Results

The layer thickness of the SiC-B₄C membranes were seen to have a uniform thickness.

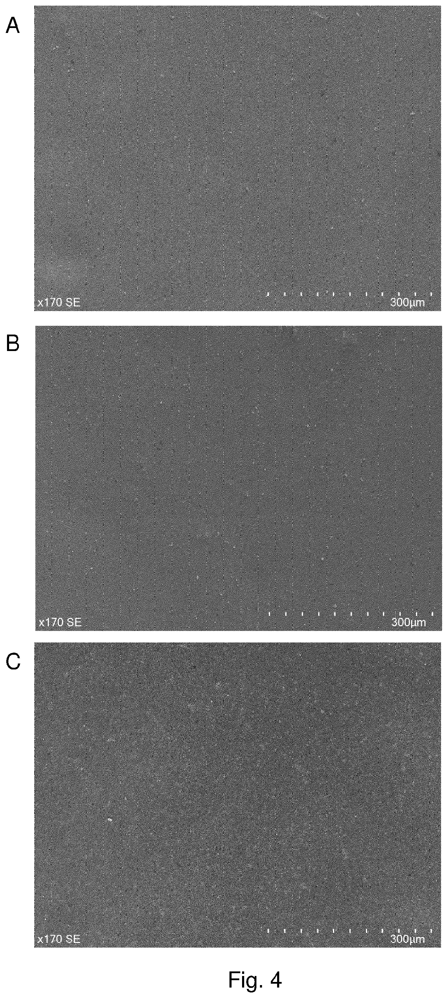

Figure 4 shows SEM micrographs of embodiments of the SiC-BaC membrane evaluated at two positions: in (A), middle (B), and out (C). The surface was seen to include no defects and lower roughness compared to the SiC membranes of Example 2.

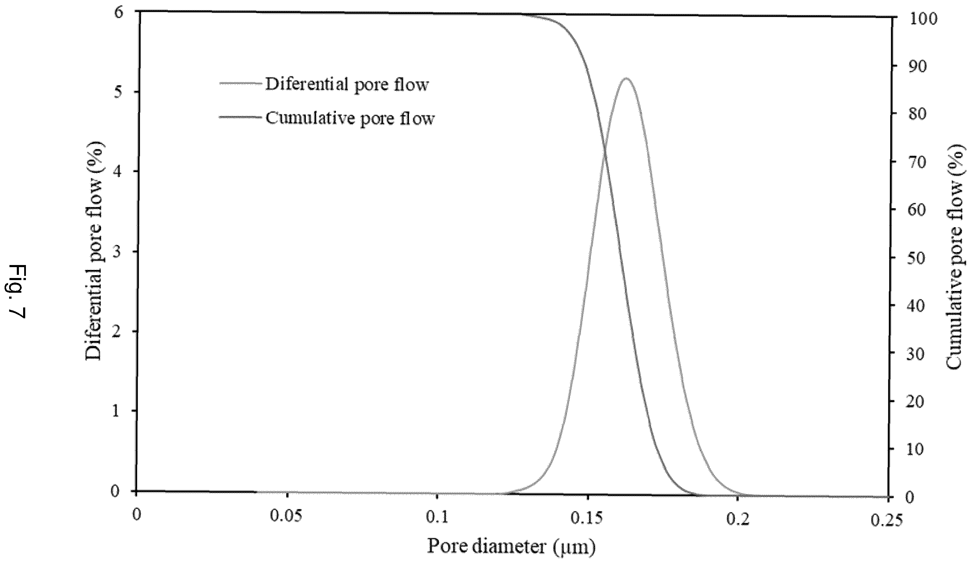

Figure 7 shows a characteristic pore size distribution of the SiC-BaC membranes, and pore size distribution percentiles d90, d50, d10 are summarized in Table 1. The PSD was surprisingly unimodal, narrow and sharp, as indicated by a D90/D10 ratio of ca. 1.2, and a difference between D90 and D10 of ca. 0.02.

Figure 9 shows the flux stability of a SiC-BaC membrane (middle curve). The membrane shows improved stability due to a lower fouling rate.

The improved stability of the SiC-BₐC membrane may be ascribed to the B₄C acting as a sintering additive and improve the sintering process by facilitating solid state diffusion, partly due to the carbon part acting as silica scavenger thereby removing any silica impurities present in the SiC powder and thus improving the solid state diffusion.

It was surprisingly seen that B₄C as sintering additive provided improved membrane surface roughness and pore size distribution, and resulting in a more stable membrane with reduced fouling.

During the subsequent carbon removal step, there is a risk of the B₄C being oxidized to boria (B₂O₃). Thus, the carbon removal step is advantageously modified to avoid or reduce the boron oxidation, e.g. by reducing the maximum temperature, and/or by chemical treatment.

### Example 4 - SiC-TiC-TiO₂ membrane

The same materials and methods as for Examples 1-2 were applied, except that the slurry was modified to include TiC and/or TiOz. This was obtained by adding a titania suspension in an amount of 10 wt% TiOz relative to suspension. The titania suspension was supplied by Tronox, and comprises nano sized titania (TiO₂) particles with an average particle size of 20-100 nm and/or with a specific surface area of ca. 300 m2/g in a water based suspension including a dispersant (diethylamine). Accordingly, any direct handling of nano sized powder is advantageously avoided. Dispersant/binder system was the same as in Examples 1-2.

### Results

The layer thickness of the SiC-TiC-TiO₂ membranes were seen to have a uniform thickness.

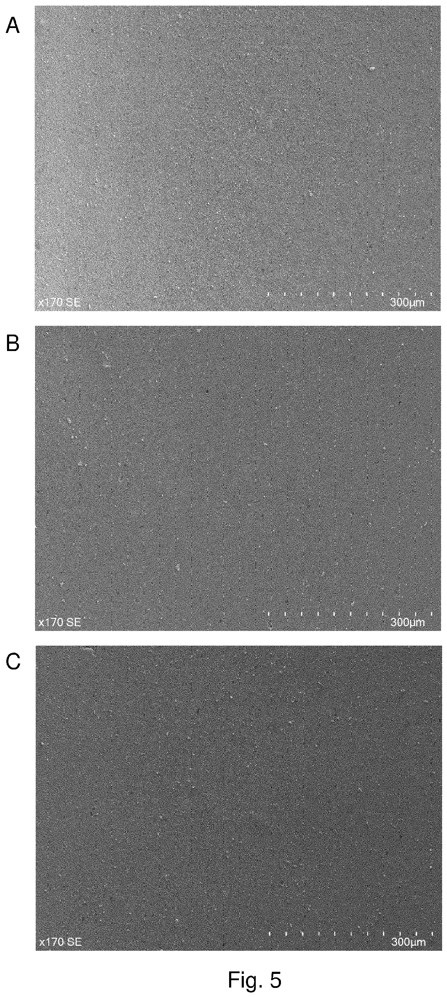

Figure 5 shows SEM micrographs of embodiments of the SiC-TiC-TiO₂ membrane evaluated at three positions: in (A), middle (B), and out (C). The surface was seen to include no defects and lower roughness compared to the SiC membranes of Example 2.

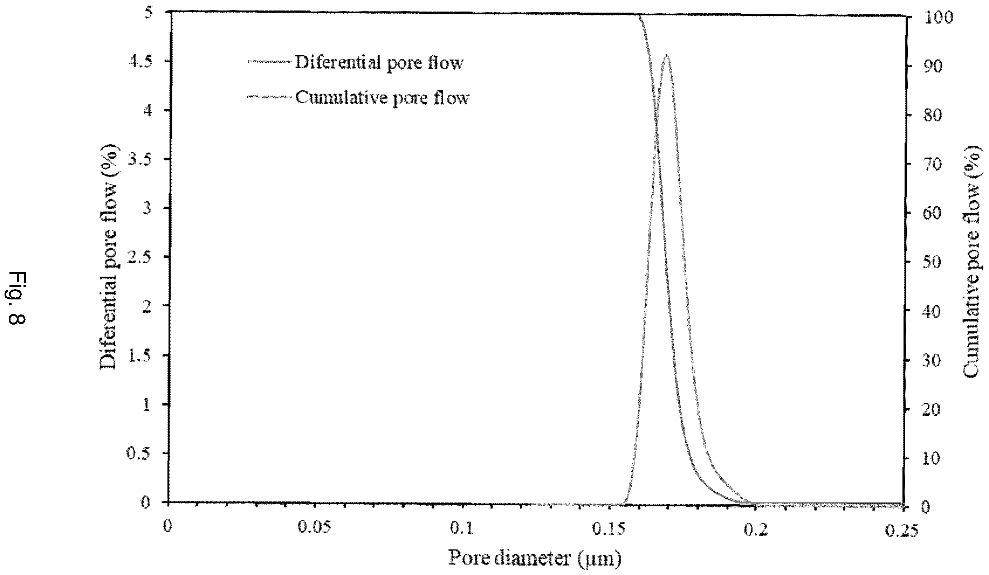

Figure 8 shows a characteristic pore size distribution of the SiC-BaC membranes, and pore size distribution percentiles d90, d50, d10 are summarized in Table 1. The PSD was surprisingly unimodal, narrow and sharp, as indicated by a D90/D10 ratio of ca. 1.1-1.2, and a difference between D90 and D10 of ca. 0.02-0.03.

Figure 9 shows the flux stability of a SiC-TiC-TiO₂ membrane (lower curve). The membrane shows improved stability due to a lower fouling rate.

The improved stability of the SiC-TiC-TiO₂ membrane may be ascribed to during sintering, the nano sized titania may react with the organic based dispersant and binder, which optionally are present or partly present as carbonaceous residues or carbonaceous decomposition products during the sintering process. The nano sized titania is accordingly partially or fully converted to TiC, and both the TiO₂/TiC and carbon may act as a sintering additive and improve the sintering process by facilitating solid state diffusion, partly due to the TiC and/or carbon part acting as silica scavenger thereby removing any silica impurities present in the SiC powder and thus improving the solid state diffusion. Depending on the degree of TiOz to TiC conversion, the amount of TiC in the final product is either absent or between 1-10 wt%. For a suspension based on 10 wt% TiO₂, and with full conversion, 7.5 wt% TiC may be observed.

It was surprisingly seen that converted nano sized TiOz as sintering additive provided improved membrane surface roughness and pore size distribution, and resulting in a more stable membrane with reduced fouling.

### Example 5 - SiC-B₄C support

The same materials and methods as for Example 3 were applied, except that the slurry was configured to produce a support comprising 7 wt% B₄C.

Similar to the SiC-B₄C membrane, the SiC-B₄C support shows a unimodal, narrow and sharp pore size distribution. For example, the pore size distribution may be characterised by a D90/D10 ratio of ca. 1.2, and a difference between D90 and D10 of ca. 0.02.

The SiC-BaC support may also show improved flux stability. The SiC-BaC support may further show surprisingly high mechanical and chemical stability.

### Example 6 - Support of SiC-TiC

The same materials and methods as for Example 4 were applied, except that the slurry was configured to produce a support comprising 10 wt% TiC.

Similar to the SiC-TiO₂ membrane, the SiC-TiO₂ support shows a unimodal, narrow and sharp pore size distribution. For example, the pore size distribution may be characterised by a D90/D10 ratio of ca. 1.5, and a difference between D90 and D10 of ca. 0.11.

The SiC-TiO support may also show improved flux stability. The SiC-TiO₂ support may further show surprisingly high mechanical and chemical stability.

### Items

The presently disclosed may be described in further detail with reference to the following items.
1. A porous ceramic body comprising SiC and one or more further carbides or further carbide precursor configured as a silica scavenger sintering aid, and comprising a pore size distribution having a D90/D10 ratio equal to or below 1.4, more preferably equal to or below 1.3, and most preferably equal to or below 1.2.
2. A porous ceramic body comprising SiC and one or more further carbides or further carbide precursor configured as a silica scavenger sintering aid, and comprising pore size distribution wherein the difference between D90 and D10 is below 0.10, more preferably between 0.001-0.07, and most preferably between 0.01-0.05, such as 0.02, 0.03, or 0.04.
3. The body according to any of the preceding items, wherein the pore size distribution is unimodal.
4. The body according to any of the preceding items, configured as a membrane, an intermediate layer, and/or support, and any combinations thereof.
5. The body according to any of the preceding items, further comprising one or more supports, one or more intermediate layers, one or more membranes, and any combinations thereof.
6. The body according to any one of items 4-5, configured as a membrane, optionally in contact with one or more intermediate layers and/or supports.
7. The body according to any of the preceding items, wherein the D50 is equal to or below 290 nm, more preferably between 50-280 nm or 100-250 nm, and most preferably between 110-230 nm, such as 150, 160, 170, or 180 nm.
8. The body according to any of the preceding items, wherein the maximum pore size is equal to or below 370 nm, more preferably equal to or below 350 nm or 300 nm, such as 250 nm, 225 nm, or 200 nm.
9. The body according to any of the preceding items, wherein the pore size distribution is measured by capillary flow porometer.
10. The body according to any one of items 4-9, configured as a support, optionally in contact with one or more intermediate layers and/or membranes.
11. The body according to any one of item 10, wherein the support comprises a maximum pore size diameter which is equal to or larger than the maximum pore size diameter of the membrane, preferably wherein said support comprises a maximum pore size diameter which is substantially larger, such as at least 2 times larger than the maximum pore size diameter of the membrane.
12. The body according to any one of items 10-11, wherein the support comprises a porosity which is equal to or larger than the porosity of the membrane, preferably wherein said support comprises a porosity which is substantially equal to the porosity of the membrane.
13. The body according to any one of items 10-12, wherein the support comprises at least one interface forming a common boundary to the membrane.
14. The body according to any one of items 10-13, wherein the common boundary between the support and the membrane has a thickness which is less than about 10 µm, such as less than about 1 µm.
15. The body according to any one of items 10-14, wherein the support interpenetrates partly into the membrane.
16. The body according to any one of items 10-15, wherein the support comprises one or more supporting layers, wherein each layer has a thickness of about 1 µm or more, such as about 10 µm or more, such as about 50 µm or more, such as about 100 µm or more, such as about 200 µm or more, such as up to about 10 mm, such as from about 50 µm to about 5 mm.
17. The body according to any one of items 10-16, wherein the support comprises a first support layer in contact with the membrane and a second support layer in contact with said first support layer, said first support layer having a maximum pore size diameter which is larger than the maximum pore size diameter of the membrane and said second support layer having a maximum pore size diameter which is larger than the maximum pore size diameter of the first support layer.
18. The body according to any one of items 10-17, wherein the support comprises a first support layer in contact with the membrane and a second support layer in contact with said first support layer, said first support layer having a porosity which is substantially equal to or larger than the porosity of the membrane and said second support layer having a porosity which is substantially equal to or larger than the porosity of the first support layer.
19. The body according to any one of items 17-18, wherein the support comprises at least one interface forming a common boundary between two different supporting layers, wherein the interface preferably has a thickness which is less than about 10 µm, such as less than about 1 µm.
20. The body according to any one of items 4-19 configured as an intermediate layer, optionally in contact with one or more supports and/or membranes.
21. The body according to any of the preceding items, substantially free of free carbon, or having a content of free carbon of below 10 wt%.
22. The body according to any of the preceding items, comprising a silica content between 0.5-5 wt%, more preferably between 1-4 wt%, most preferably between 1.5-2 wt%, such as 1.4 wt% or 1.8 wt%.
23. The body according to any of the preceding items, wherein the one or more further carbides are further configured as a silica scavenger sintering aid and configured for improving solid state diffusion in SiC.
24. The body according to any of the preceding items, wherein the one or more further carbides are selected from the group of: boron carbide (B₄C), titanium carbide (TiC), zirconium carbide (ZrC), tungsten carbide (WC), and any combinations thereof, and preferably is boron carbide (B₄C) and/or titanium carbide (TiC).
25. The body according to any of the preceding items, comprising between 50-99.9 wt% SiC, more preferably between 58-99.5 wt% or 60-99 wt% SiC, and most preferably between 70-98 wt%, 80-95 wt%, or 85-90 wt% SiC.
26. The body according to any of the preceding items, comprising between 0.1-50 wt% further carbides, more preferably between 1-45 wt% or 2-40 wt% further carbides, and most preferably between 3-30 wt% further carbides, such as 5, 10, 15, 20, 25 wt% further carbides.
27. The body according to any of the preceding items, comprising between 2-20 wt% boron carbide, more preferably between 3-15 wt% or 4-12 wt% boron carbide, and most preferably between 5-10 wt% boron carbide, such as 6, 7, 8, or 9 wt% boron carbide.
28. The body according to any of the preceding items, comprising between 0.5-20 wt% TiC, more preferably between 1-10 wt% TiC, such as 7.5 wt% TiC.
29. The body according to any of the preceding items, obtained from sintering a mixture comprising SiC particles and titania (TiO₂) particles, wherein the titania particles have a specific surface area of between 200-400 m2/g, more preferably between 250-350 m2/g, such as 300 m2/g.
30. The body according to item 29, wherein the titania particles have an average particle size between 20-100 nm.
31. The body according to any one of items 29-30, wherein the titania particles in the mixture are provided as a stabilized suspension, e.g. stabilized by a dispersant, such as diethylamine.
32. The body according to any one of the preceding items, configured as a membrane.
33. The body according to any one of the preceding items, configured as a membrane and comprising 7 wt% boron carbide.
34. The body according to any one of the preceding items, configured as a support in contact with one or more intermediate layers and/or membranes.
35. The porous ceramic body according to any of the preceding items configured to be produced by the method according to any of items 36-47.
36. A method of producing a porous ceramic body, comprising the steps of:
   a) providing a suspension of SiC particles and one or more further carbides or a further carbide precursor, wherein the further carbide(s) are configured as a silica scavenger sintering aid,
   b) shaping the suspension into a body with a defined geometry,
   c) drying the shaped geometry,
   d) sintering the dried geometry at a temperature between 1500-1900 °C for 1.5 - 4 hours under inert atmosphere.
37. The method according to item 36, wherein the SiC particles have a purity degree including a silica content between 0.5-5 wt%, more preferably between 1-4 wt%, most preferably between 1.5-2 wt%, such as 1.4 wt% and/or 1.8 wt%.
38. The method according to any of items 36-37, wherein the SiC particles comprise a mixture of two sub-micron powders in a mixture ratio of 1:1, wherein the first sub-micron powder has a first average particle size, and the second sub-micron powder has a second average particle size.
39. The method according to item 38, wherein the ratio between the first and second average particle sizes is between 0.20 - 0.90, more preferably between 0.30 - 0.80, and most preferably between 0.35 - 0.75, such as 0.40, 0.50, or 0.60.
40. The method according to any one of items 36-39, wherein the further carbide precursor is titania particles with an average size between 20-100 nm and/or a specific surface area of between 200-400 m2/g, more preferably between 250-350 m2/g, such as 300 m2/g.
41. The method according to item 40, wherein the titania particles are provided as a stabilized suspension, e.g. stabilized by a dispersant, such as diethylamine.
42. The method according to any one of items 36-41, wherein the porous ceramic body is deposited on a pre-sintered support.
43. The method according to any one of items 36-42, wherein the suspension in step (b) is shaped by a technique selected from the group of: dip coating, spraying, tape casting, lamination, extrusion, and combination thereof.
44. The method according to any one of items 36-43, wherein the suspension in step (b) is shaped into a geometry selected from the group of: layer, intermediate layer, support.
45. The method according to any one of items 36-44, wherein the suspension in step (b) is shaped as a layer, a disc, a monotube, a multichannel, and combinations thereof.
46. The method according to any one of items 36-45, wherein the sintering is carried out at a temperature between 1500 - 1900 °C for 1.5 - 4 hours under inert atmosphere, such as argon (Ar) and/or nitrogen (N2).
47. The method according to any one of items 36-46 configured to produce the porous ceramic body according to any of items 1-35.
48. A filter system comprising the porous ceramic body according to any of items 1-35 a feeding pipe for feeding liquid into the ceramic filter and/or a permeate pipe for withdrawing filtered liquid and at least one liquid pump connected to said feeding pipe and/or to said permeate pipe.
49. The filter system according to item 48, wherein the porous ceramic body is configured for cross-flow filtration or dead-end filtration.
50. The filter system according to any one of items 48-49, comprising a liquid pump arranged to provide a pressure difference over the porous ceramic body to provide a liquid flow from a filter inflow end to a filter outflow end, wherein the liquid flow preferably has a primed water flux of at least about 400 L h⁻¹ m⁻² bar ¹, measured at 25 °C and at a pressure difference where delta P is a linear function to the flux, preferably the primed water flux between about 400 to 600 L h⁻¹ m⁻² bar'.
51. A method of filtering a liquid through a porous ceramic body according to any one of items 1-35, or a filter system according to any of items 49-50, thereby obtaining a filtrate.
52. The method according to item 51, wherein the liquid is an aqueous suspension comprising contaminates which are substantially insoluble in said liquid.

## Claims

1. A porous ceramic body comprising SiC and one or more further carbides or further carbide precursor configured as a silica scavenger sintering aid, and comprising a pore size distribution having a D90/D10 ratio below 1.4, more preferably equal to or below 1.3, and most preferably equal to or below 1.2.

2. A porous ceramic body comprising SiC and one or more further carbides or further carbide precursor configured as a silica scavenger sintering aid, and comprising pore size distribution wherein the difference between D90 and D10 is below 0.10, more preferably between 0.001-0.07, and most preferably between 0.01-0.05, such as 0.02, 0.03, or 0.04.

3. The body according to any of the preceding claims, wherein the pore size distribution is unimodal.

4. The body according to any of the preceding claims, wherein the D50 is equal to or below 290 nm, more preferably between 50-280 nm or 100-250 nm, and most preferably between 110-230 nm, such as 150, 160, 170, or 180 nm.

5. The body according to any of the preceding claims, wherein the maximum pore size is equal to or below 370 nm, more preferably equal to or below 350 nm or 300 nm, such as 250 nm, 225 nm, or 200 nm.

6. The body according to any of the preceding claims, comprising a silica content between 0.5-5 wt%, more preferably between 1-4 wt%, most preferably between 1.5-2 wt%, such as 1.4 wt% or 1.8 wt%.

7. The body according to any of the preceding claims, wherein the one or more further carbides are selected from the group of: boron carbide (B₄C), titanium carbide (TiC), zirconium carbide (ZrC), tungsten carbide (WC), and any combinations thereof, and preferably is boron carbide (B₄C) and/or titanium carbide (TiC).

8. The body according to any of the preceding claims, comprising between 0.1-50 wt% further carbides, more preferably between 1-45 wt% or 2-40 wt% further carbides, and most preferably between 3-30 wt% further carbides, such as 5, 10, 15, 20, 25 wt% further carbides.

9. The body according to any of the preceding claims, comprising between 2-20 wt% boron carbide, more preferably between 3-15 wt% or 4-12 wt% boron carbide, and most preferably between 5-10 wt% boron carbide, such as 6, 7, 8, or 9 wt% boron carbide.

10. The body according to any of the preceding claims, comprising between 0.5-20 wt% TiC, more preferably between 1-10 wt% TiC, such as 7.5 wt% TiC.

11. A method of producing a porous ceramic body, comprising the steps of:
a) providing a suspension of SiC particles and one or more further carbides or a further carbide precursor, wherein the further carbide(s) are configured as a silica scavenger sintering aid,
b) shaping the suspension into a body with a defined geometry,
c) drying the shaped geometry,
d) sintering the dried geometry at a temperature between 1500-1900 °C for 1.5 - 4 hours under inert atmosphere.

12. The method according to claim 11, wherein the SiC particles have a purity degree including a silica content between 0.5-5 wt%, more preferably between 1-4 wt%, most preferably between 1.5-2 wt%, such as 1.4 wt% and/or 1.8 wt%.

13. The method according to any one of claims 11-12, wherein the further carbide precursor is titania particles with an average size between 20-100 nm and/or a specific surface area of between 200-400 m2/g, more preferably between 250-350 m2/g, such as 300 m2/g.

14. The method according to any one of claims 11-13, wherein wherein the porous ceramic body is deposited on a pre-sintered support.

15. A filter system comprising the porous ceramic body according to any of claims 1-10, a feeding pipe for feeding liquid into the ceramic filter and/or a permeate pipe for withdrawing filtered liquid and at least one liquid pump connected to said feeding pipe and/or to said permeate pipe.
